# EUROPEAN PATENT SPECIFICATION

(11) **EP 0 582 634 B1**
(45) Date of publication and mention of the grant of the patent: **07.04.1999**
(21) Application number: 92910061.8
(22) Date of filing: 28.04.1992
(51) Int. Cl.: B23B 27/04, B23B 27/22

(54) **CHIP FORMING INSERT, ESPECIALLY FOR TURNING AND SLOTTING**
SCHNEIDEINSATZ, INSBESONDERE FÜR DREHEN UND EINSTECHEN
OUTIL RAPPORTE, NOTAMMENT POUR LE TOURNAGE ET LE MORTAISAGE, PERMETTANT DE FORMER LES COPEAUX

(30) Priority: 02.05.1991 SE 9101324
(43) Date of publication of application: 16.02.1994
(73) Proprietor: MIRCONA AB, S-801 33 Gävle (SE)
(72) Inventor: MIHIC, Wlajko, S-802 67 Gävle (SE)
(74) Representative: Nordén, Ake
(86) International application number: PCT/SE92/00278
(87) International publication number: WO 92/19402

(56) References cited:
- EP-A- 0 222 951
- EP-A- 0 245 225
- SE-B- 461 635
- US-A- 4 583 887
- US-A- 4 957 396

## Description

### Technical field of the invention

This invention relates to cutting bits or inserts for cutting work especially turning wherein the insert is detachably attachable at a tool holder. A cutting insert comprising the features of the preamble of claim 1 is known from SE-B-461 635.

### Background of the invention

Within the technical field is known a cutting bit insert which adjacent to the cutting edge presents a recess, down into which the middle portion of the chip is pressed during the machining operation whereas the side portions are kept in a somewhat higher plane in order to give the chip a lateral bending so that it will have less width than it has just upon leaving the cutting edge and thereby becomes narrower than the groove cut. The laterally bent chip can then roll itself and form a roll, which is narrower than the turned groove and because of that causes no damage to the machined surfaces or the like.

Within this field of the technique it is also known to arrange, remote from the cutting edge of any tool, a so called chip breaker, that is a protruding portion which will be engaged by the cut chip in order to be guided away abruptly which results in a breaking of the chip preventing it from forming continuous rolls, spirals or spools which in turn might cause tool damages or damage the work piece and machined surfaces. One problem arising here is that the chip, because of the deformation, is subjected to by the breaking off increases its lateral width and because of that might cause congestion of chips and bad surface finish at the side surfaces of the groove.

One essential aspect with this invention is to bring about a new cutting insert so arranged that it besides lateral bending of the chip also causes it to break which results in short chips having less width than the groove cut and which chips are easily removed from the groove without tendency to adhere to the sides of the groove, the tool or the like.

### Summary of the invention

The cutting insert of the invention is defined in claim 1. Projections are arranged beyond the cutting edge seen in the direction of movement of the chip such projections arranged to guide the chip away from the surface adjacent the cutting edge and act as chip breaker and said projections being arranged laterally remote from each other seen in the direction of movement and that there is between such projections commencing adjacent the cutting edge, a concave recess having along its sides defined by the facing surfaces of said projections obliquely arranged and concave surfaces.

A chip cut from the work piece slides inwardly over the middle recess arranged adjacent the edge and is thereupon subjected to an initial lateral bending as the portion of the chip still attached to the work pieces presses the free portion of the chip against the surface portion adjacent the edge. Simultaneously the edge strakes or flanks are guided by the surface portions on either side of the recess and after a short further movement along these, meet the protruding projections, which force the chip still attached to the work piece by an intermediate portion and pushed forwardly thereby, to bend off upwardly, wherein the chip portion between the projections eventually leaves the bottom of the middle recess and floats freely between the end surfaces of the projections. The chip then heavily deformed both in its length and lateral directions will break beyond the top portions of the projections and form laterally bent or arched and lengthwise curved short chip pieces having smaller width than the groove cut by the cutter edge.

### Brief description of the drawings

The above as well as other features and advantages of an embodiment of the invention will be apparent through consideration of the detailed description in connection with the several drawings in which:

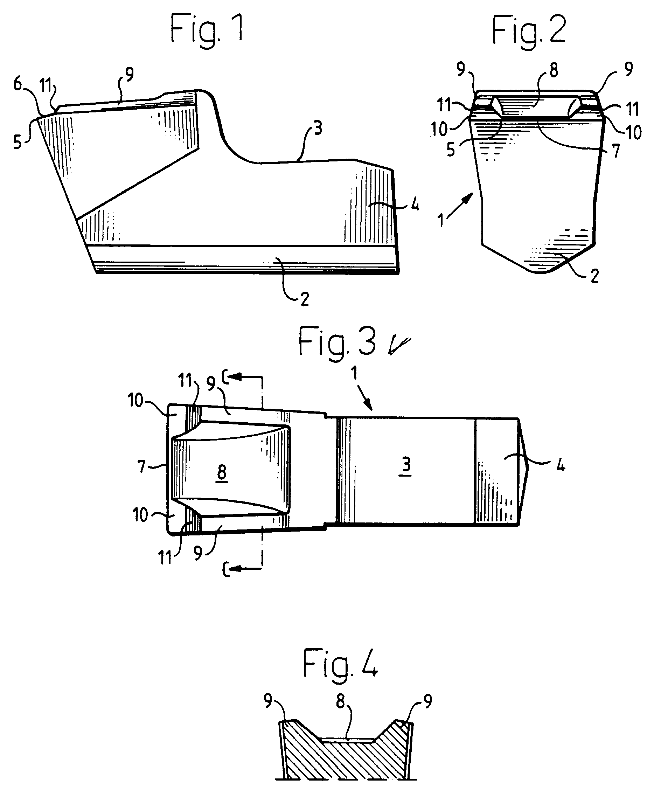

Figure 1 is a side view showing one as an example selected cutting insert according to the invention,
Figure 2 shows the same insert seen from the edge end,
Figure 3 is a top view of the cutting insert, and
Figure 4 is a sectional view taken along the line C-C in Figure 3.

The cutting insert 1, the main features of which essentially correspond to those of a known insert, has a V-shaped bottom ridge 2 intended to cooperate with a V-groove at the insert holder and an upper abutment surface 3 intended to be engaged by an abutment portion at the holder in order to, by pressing the shaft portion 4 of the insert, hold it in position at the insert holder.

The insert 1 presents one edge 5 and a planar surface 6 and to this is connected the middle portion 7 of said surface 6 having being narrow in the direction of movement of the chips and passes over in a recess 8 having a concave bottom and defined by convex outwardly inclined side portions 9 whereas the side portions 10 of the planar surface are wider seen in the same direction.

As already indicated the recess 8 adjoining to the narrow central portion 7 of the surface 6 adjacent the edge 5, has as main task to allow the middle portion of the cut chip to be displaced downwardly beyond the level of the edge strakes of the chip guided by the outer portions 10 of the surface 6 and thereby give the chip a bending or arching laterally. The end end edges 11 of the side walls or portions 9 adjoining to the said side portions 10 of the surface 6 form chip breaking abutments to be engaged by the edge strakes of the chip guided by the outer portions abruptly upwardly away from the plane even with the edge.

In a preferred embodiment the angle between the surface adjacent the edge 5 and formed by a narrow middle portion 7 and wider side portions 10 and the end surfaces 11 serving as chip breaker is about 55°. Further, the angle between same surface and the surfaces of the projections 9 defining the recess 8 is about 30°.

The lateral bending results in a reduction of width at the chip so it becomes considerably narrower than the groove 5 cut by the insert. The chip thereby cannot seize up at the groove sides and be pulled along and cause damages on work piece or tools. The guiding or bending upwardly of the chip already bent laterally results in the breaking off in rather short pieces of the chip because of the heavy material stress brought about by the deformation which pieces fall away from the working area without collecting or causing damages. The cutting fluid added during the turning contributes in removing the broken off pieces of chip.

## Claims

1. Cutting insert for cutting operations, preferably insert to be mounted at an insert holder for the use in a lathe or similar machining apparatus, said insert including portions deforming a chip cut by the cutting edge of the insert so as to facilitate the removal thereof, wherein there is, adjacent the cutting edge (5) and beyond same seen in the direction of movement of the chips relatively to the insert, in a middle portion (7) of a surface or land adjoining the cutting edge, a recess (8) having obliquely arranged sides and a concave bottom for receiving a centre portion of a cut chip for laterally bending or deforming same and at each side of said recess surface portions having at each side of the recess upwardly protruding surface portions for engaging the chip on its movement from the cutting edge on, the protruding surface portions (11) being arranged to be reached by the side strakes or edges of the chip after its short movement over the side portions (10) of said surface or land adjoining the cutting edge and inwardly over the end of the recess, the protruding surface portions (11) being arranged to engage and bend or upset the chip side strakes or edges upwardly away from the plane of the surface (6) adjoining the cutting edge and to cooperate with the recess (8) bottom and walls in exerting an upwardly directed force against the laterally bent chip with upwardly bent side edges in order to break off the chip, **characterized** in that the upwardly protruding surface portions (11) of the insert are arranged closer to the recess end adjacent to the cutting edge (5) than to the opposite recess end.

2. Cutting insert according to claim 1, **characterized** in that the angle between the plane of the surface adjacent the cutting edge (5) and the protruding abutment end surfaces (11) for engaging and breaking upwardly the chip side strakes is in the range of 45° - 65°, whereas the angle between the same plane and the recess side or wall portions (9) is in the range of 20° - 40°.

3. Cutting insert according to claim 2, **characterized** in that the angle between the plane adjoining to the cutting edge and the chip engaging protruding surfaces is 55° and that the angle between the same plane and the recess side or wall portions preferably is 30°.

## Patentansprüche

1. Schneideinsatz für Schneidarbeiten, der bevorzugt in einen Werkzeughalter in einer Drehbank oder einer ähnlichen Vorrichtung eingesetzt wird, wobei dieser Schneideinsatz Bereiche aufweist, welche einen Span, der durch die Schneidkante des Schneideinsatzes abgehoben wird, so verformt, daß er leicht entfernt werden kann, und in dem an der Schneidkante (5) und in Richtung der Bewegung der Späne gegenüber dem Schneideinsatz über diesen hinaus in einem mittleren Teil (7) einer Fläche an dem Schneideinsatz ein Hinterstich (8) vorgesehen ist, welcher schräge Seiten und einen konkaven Grund aufweist, um einen mittleren Teil eines abgehobenen Spans aufzunehmen und ihn zur Seite zu biegen oder zu verformen, sowie an beiden Seiten dieses Hinterstichs Abschnitte vorgesehen sind, welche an jeder Seite dieses Hinterstichs nach oben vorstehende Flächen aufweisen, um den Span während seiner Entfernung von der Schneidkante zu erfassen, wobei die nach oben vorstehenden Flächenteile (11) des Schneideinsatzes so angeordnet sind, daß sie von den Seitenflanken oder Kanten des Spans nach seiner kurzen Bewegung über die Seitenränder dieser Fläche an der Schneidkante nach innen über das Ende des Hinterstichs erreicht werden kann, wobei diese vorstehenden Flächen (11) so angeordnet sind, daß sie die seitlichen Ränder des Spans von der Fläche (6) an der Schneidkante wegbiegen oder wegtreiben können und mit dem Boden und den Wänden des Hinterstichs (8) zusammenwirken und eine nach oben gerichtete Kraft gegen den zur Seite gebogenen Span mit den nach oben gebogenen Rändern ausüben kann, um den Span abzubrechen,
**dadurch gekennzeichnet**, **daß**
die nach oben vorstehenden Flächen (11) des Schneideinsatzes im Vergleich zu dem gegenüberliegenden Ende des Hinterstichs näher an dem Ende des Hinterstichs in der Nähe der Schneidkante (5) angeordnet sind.

2. Schneideinsatz nach Anspruch 1,
**dadurch gekennzeichnet**, **daß**
der Winkel zwischen der Ebene der Fläche an der Schneidkante (5) und den vorstehenden Endflächen (11) für die Erfassung und das Abbrechen des Spans in oberer Richtung der Seitenflanken des Spans im Bereich von 45° bis 65° liegt, während der Winkel zwischen der gleichen Ebene und den Seitenwänden (9) im Bereich von 20° bis 40° liegt.

3. Schneideinsatz nach Anspruch 2,
**dadurch gekennzeichnet**, **daß**
der Winkel zwischen der Ebene an der Schneidkante und den den Span erfassenden vorstehenden Flächen 55° beträgt, und daß der Winkel zwischen der gleichen Ebene und der Seite oder den Wandteilen der Hinterstich vorzugsweise 30° beträgt.

## Revendications

1. Outil rapporté de coupe pour opérations de découpe, l'outil rapporté devant de préférence être monté sur un organe de maintien de l'outil rapporté pour être utilisé dans un tour ou un appareil d'usinage analogue, ledit outil rapporté comprenant des parties pour déformer un copeau découpé par le bord de coupe de l'outil rapporté de manière à faciliter son retrait, dans lequel il existe, de manière adjacente au bord de coupe (5) et au-delà de celui-ci vu dans la direction de déplacement des copeaux par rapport à l'outil rapporté, dans une partie médiane (7) d'une surface ou plat contigu au bord de coupe, un évidement (8) présentant des bords montés obliquement et un fond concave pour recevoir une partie centrale d'un copeau découpé afin de le plier ou de le déformer latéralement et, au niveau de chaque côté dudit évidement, des parties de surface présentant au niveau de chaque côté de l'évidement des parties de surface faisant saillie vers le haut pour engager le copeau lors de son déplacement à partir du bord de coupe,
les parties de surface saillantes (11) étant prévues pour être atteintes par les bordures latérales ou bords du copeau après son court déplacement sur les parties latérales (10) de ladite surface ou plat contigu au bord de coupe et à l'intérieur sur l'extrémité de l'évidement, les parties de surface saillantes (11) étant prévues pour s'engager avec les bordures latérales ou bords du copeau et le plier ou le renverser vers le haut loin du plan de la surface (6) contigu au bord de coupe et pour coopérer avec le fond et les parois de l'évidement (8) en exerçant une force dirigée vers le haut à l'encontre du copeau plié latéralement avec des bords latéraux pliés vers le haut de manière à briser le copeau, **caractérisé** en ce que les parties de surface saillantes (11) de l'outil rapporté sont prévues plus près de l'extrémité de l'évidement adjacent au bord de coupe (5) que de l'extrémité de l'évidement opposée.

2. Outil rapporté selon la revendication 1, **caractérisé** en ce que l'angle entre le plan de la surface adjacente au bord de coupe (5) et les surfaces d'extrémité de butée saillantes (11) prévues pour s'engager avec les bordures latérales du copeau et les briser vers le haut est dans la gamme de 45° à 65°, alors que l'angle entre le même plan et les parties latérales ou de paroi (9) du logement est dans la gamme de 20° à 40°.

3. Outil rapporté selon la revendication 2, **caractérisé** en ce que l'angle entre le plan contigu au bord de coupe et les surfaces saillantes d'engagement du copeau est de 55° et en ce que l'angle entre le même plan et les parties latérales ou de parois de l'évidement est de préférence de 30°.
